(19) Europäisches Patentamt
European Patent Office
Office européen des brevets

(11) Veröffentlichungsnummer: **0 071 805**
**A2**

# (12) EUROPÄISCHE PATENTANMELDUNG

(21) Anmeldenummer: **82106443.3**

(22) Anmeldetag: **17.07.82**

(51) Int. Cl.³: **C 07 F 9/40**

(30) Priorität: **31.07.81 DE 3130433**

(43) Veröffentlichungstag der Anmeldung: **16.02.83**
**Patentblatt 83/7**

(84) Benannte Vertragsstaaten: **AT BE CH DE FR GB IT LI NL**

(71) Anmelder: **BAYER AG, Zentralbereich Patente, Marken und Lizenzen, D-5090 Leverkusen 1, Bayerwerk (DE)**

(72) Erfinder: **Lantzsch, Reinhard, Dr., Heymannstrasse 32, D-5090 Leverkusen (DE)**

(54) **Verfahren zur Herstellung von alpha-Hydroxy-phosphonsäureestern.**

(57) Die vorliegende Erfindung betrifft ein Verfahren zur Herstellung von α-Hydroxy-phosphonsäureestern der Formel I

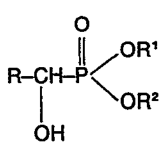

(I)

in welcher

R für gegebenenfalls substituiertes Aryl oder Heteroaryl steht,

$R^1$ und $R^2$ unabhängig voneinander für Alkyl oder Phenyl oder zusammen für Alkandiyl (Alkylen) stehen,

welches dadurch gekennzeichnet ist, daß man α-Oxophosphonsäureester mit Wasserstoff in Gegenwart eines Hydrierungskatalysators umsetzt.

EP 0 071 805 A2

0071805

BAYER AKTIENGESELLSCHAFT 5090 Leverkusen, Bayerwerk
Zentralbereich IVa / ZP
Patente, Marken und Lizenzen Rt/Fr

## Verfahren zur Herstellung von α-Hydroxy-phosphonsäureestern

Die Erfindung betrifft ein neues Verfahren zur Herstellung von α-Hydroxy-phosphonsäureestern.

Es ist bereits bekannt geworden, daß man α-Hydroxy-phosphonsäureester erhält, wenn man α-Oxo-Phosphonsäureester mit Metallen, wie z.B. Zink in Gegenwart von Quecksilber-(II)chlorid, Legierungen, wie z.B. Natriumamalgam, oder Hydridkomplexen, wie z.B. Natriumboranat, umsetzt (vgl. Israel J.Chem. 4(1966), 225; ibid 9(1971), 33; Chem. Ber. 103 (1970), 2984; Houben-Weyl, Methoden der organischen Chemie, 4.Auflage, Band 12/1,S.512, Thieme-Verlag, Stuttgart 1963). Die genannten Methoden sind aus Kostengründen für die Anwendung im industriellen Bereich wenig geeignet.

Es wurde nun ein Verfahren zur Herstellung von α-Hydroxy-phosphonsäureestern der Formel I

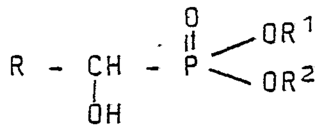

(I)

in welcher

R für gegebenenfalls substituiertes Aryl oder Heteroaryl steht,

$R^1$ und $R^2$ unabhängig voneinander für Alkyl oder Phenyl oder zusammen für Alkandiyl (Alkylen) stehen,

gefunden, welches dadurch gekennzeichnet ist, daß man α-Oxo-phosphonsäureester der Formel II

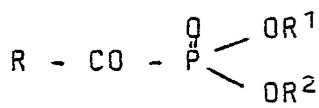

(II)

in welcher

R, $R^1$ und $R^2$ die oben angegebene Bedeutung haben,

mit Wasserstoff in Gegenwart eines Hydrierungskatalysators und in Gegenwart eines inerten Verdünnungsmittels bei Temperaturen zwischen 20 und 200°C umsetzt.

Es ist als überraschend zu bezeichnen, daß die Umsetzung von α-Oxo-phosphonsäureestern mit Wasserstoff gemäß dem erfindungsgemäßen Verfahren in praktisch quantitativen Ausbeuten zu α-Hydroxyphosphonsäureestern führt, da nach der Literatur (vgl.Chem. Ber. 103, (1970), 2984) diese Umsetzung ,geringe bzw. keine Ausbeute' ergeben soll und da weiter bekannt ist, daß aus Oxo-phosphonsäureestern und Nickelverbindungen komplexe Substanzgemische entstehen (vgl. Gazz. Chim.Ital. 107(1977), 217).

Das erfindungsgemäße Verfahren weist verschiedene Vorteile gegenüber dem Stand der Technik auf. Die katalytische Hydrierung ist kostengünstiger als die Umsetzung mit den bisher verwendeten Reduktionsmitteln. Durch Arbeiten im neutralen Medium können auch Verbindungen hergestellt werden, die basenempfindliche Gruppen enthalten.

Verwendet man Benzoylphosphonsäure-dimethylester und Wasserstoff in Gegenwart von Raney-Nickel als Ausgangsstoffe, so kann der Reaktionsablauf beim erfindungsgemäßen Verfahren durch das folgende Formelschema wiedergegeben werden:

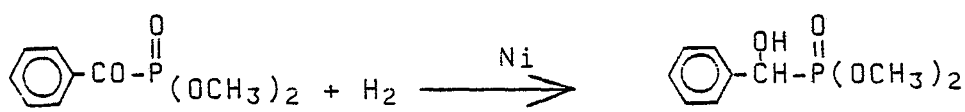


Die beim erfindungsgemäßen Verfahren als Ausgangsstoffe zu verwendenden α-Oxo-phosphonsäureester sind durch die Formel (II) definiert. In dieser Formel stehen vorzugsweise

R für gegebenenfalls durch Fluor, Chlor, Brom, $C_1$-$C_4$-Alkyl, Trifluormethyl, Trifluormethoxy, $C_1$-$C_4$-Alkoxy und/oder Phenoxy substituiertes Phenyl, Pyridyl oder Pyrimidinyl,

$R^1$ für $C_1$-$C_4$-Alkyl oder Phenyl,

$R^2$ für $C_1$-$C_4$-Alkyl oder Phenyl, oder zusammen mit $R^1$ für geradkettiges oder verzweigtes $C_2$-$C_5$-Alkandiyl.

Die Ausgangsverbindungen der Formel (II) sind bekannt und/oder können nach an sich bekannten Verfahren aus entsprechenden Carbonsäurechloriden und Phosphorigsäureestern hergestellt werden (vgl. Houben-Weyl, Methoden der organischen Chemie, 4.Auflage, Band 12/1, S.453-458, Thieme-Verlag, Stuttgart 1963; J.Am.Chem.Soc. 86, (1964), 3862-3866; J.Org.Chem. 30 (1965), 1265-1268; ibid. 36 (1971), 128-136; DE-OS 29 17 620 und DE-OS 29 34 034.

Als Beispiele für die Ausgangsverbindungen der Formel (II) seien genannt:
Benzoyl-, 3-Methyl-benzoyl-, 4-Methyl-benzoyl-, 3,4-Dimethyl-benzoyl-, 4-Fluor-benzoyl-, 3-Chlor-benzoyl-, 4-Chlor-benzoyl-, 3,4-Dichlor-benzoyl-, 4-Brom-benzoyl-, 3-Brom-4-fluor-benzoyl-, 4-tert.-Butyl-benzoyl-, 4-Methoxy-benzolyl-, 3,4-Dimethoxy-benzoyl-, 3-Trifluormethyl-benzoyl-, 3-Phenoxy-benzoyl-, 4-Fluor-3-phenoxy-benzoylphosphonsäure-dimethylester und -diethylester.

Das erfindungsgemäße Verfahren wird in Gegenwart von Verdünnungsmitteln durchgeführt. Als solche kommen inerte organische Lösungsmittel vorzugsweise in Betracht. Hierzu gehören insbesondere gegebenenfalls halogenierte Kohlenwasserstoffe, wie Hexan, Heptan, Cyclohexan, Petrolether, Benzin, Ligroin, Benzol, Toluol, Xylol, Chlorbenzol, Dichlorbenzol, Dekalin, sowie Ether, wie z.B. Dibutylether, Glycoldimethylether, Diglycoldimethylether, Tetrahydrofuran und Dioxan.

Das erfindungsgemäße Verfahren wird in Gegenwart eines Hydrierungskatalysators durchgeführt. Es werden vorzugsweise wasserfreie, neutrale Metallkatalysatoren wie Raney-Nickel, Raney-Cobalt oder Palladium gegebenenfalls auf üblichen Trägermaterialien, wie z.B. Kohle, eingesetzt. Raney-Nickel wird als Katalysator besonders bevorzugt.

Die Reaktionstemperaturen können bei der Durchführung des erfindungsgemäßen Verfahrens in einem größeren Bereich variiert werden. Im allgemeinen arbeitet man zwischen 20 und 200°C, vorzugsweise zwischen 50 und 160°C, insbesondere zwischen 90 und 130°C.

Das erfindungsgemäße Verfahren wird im allgemeinen bei erhöhtem Druck, vorzugsweise zwischen 5 und 200 bar, insbesondere zwischen 10 und 100 bar, durchgeführt.

Zur Durchführung des erfindungsgemäßen Verfahrens setzt man je Mol α-Oxo-phosphonsäureester der Formel (II) zwischen 1 und 100 g, vorzugsweise zwischen 5 und 50 g Katalysator ein.

Die Ausgangsstoffe der Formel (II), der Katalysator und das Verdünnungsmittel werden vermischt und während des Aufheizens auf die erforderliche Temperatur wird Wasserstoff eingedrückt. Bei konstanter Temperatur wird so lange Wasserstoff eingedrückt, bis die Druckkonstanz das Reaktionsende anzeigt.

Zur Isolierung der Produkte wird filtriert und das Lösungsmittel unter vermindertem Druck sorgfältig abdestilliert.

Die erfindungsgemäß herzustellenden Verbindungen können als Zwischenprodukte zur Herstellung von Schädlingsbekämpfungsmitteln verwendet werden (vgl. DE-OS 29 34 034).

## Herstellungsbeispiele

### Beispiel 1

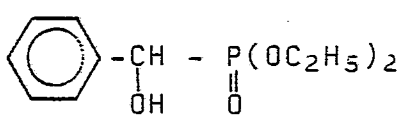

31,5g (0,13 Mol) Benzoyl-phosphonsäurediethylester werden in 200 ml Tetrahydrofuran gelöst und mit 3g Raney-Nickel versetzt, das zunächst mit Wasser, dann mit Ethanol, dann mit Tetrahydrofuran gewaschen wurde. Es wird bei einem Wasserstoffdruck von 40 bar auf 120°C aufgeheizt und anschließend bei 80 - 90 bar/$H_2$ hydriert. Nach Aufarbeitung in üblicher Weise erhält man 29,7g eines Oels, das nach einiger Zeit zu einer kristallinen Masse erstarrt,

die aus reinem α-Hydroxy-benzyl-phosphonsäurediethylester besteht. Ausbeute: 93,5 % der Theorie.

Beispiel 2

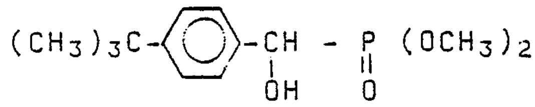

47,5g (0,175 Mol) 4-tert.-Butyl-benzoyl-phosphonsäure-dimethylester werden in 250 ml Tetrahydrofuran gelöst und mit 5 g Raney-Nickel, das zunächst mit Wasser, dann mit Ethanol und anschließend mit Tetrahydrofuran gewaschen wurde, versetzt. Es wird bei einem Wasserstoffdruck von 55 bar auf 135°C aufgeheizt und bei 65-90 bar/$H_2$ hydriert. Die Hydrierung ist nach 40 Minuten beendet. Nach Abfiltrieren des Katalysators und Abdestillieren des Tetrahydrofurans erhält man 47,6g eines Oeles, das nach kurzer Zeit kristallisiert, nachdem man die letzten Tetrahydrofuran-Reste im Hochvakuum entfernt hat. Der α-Hydroxy-4-tert.-butyl-benzyl-phosphonsäuredimethylester schmilzt bei 102 °C. Ausbeute: 100 % der Theorie.

Beispiel 3

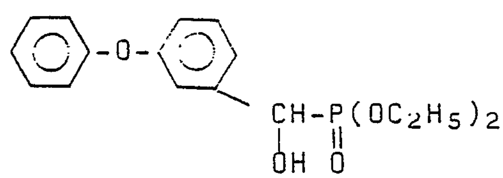

58,8g (0,2 Mol) 3-Phenoxy-benzoyl-phosphonsäurediethylester werden in 300 ml Toluol gelöst und mit 10g Raney-Nickel, das zunächst mit Wasser, dann mit Ethanol und anschließend mit Tetrahydrofuran gewaschen wurde, versetzt. Es wird mit einem Wasserstoffdruck von 50 bar auf 130°C aufgeheizt und bei 80-90 bar/$H_2$ hydriert.

Nach Abfiltrieren des Katalysators und Abdestillieren des Toluols hinterbleiben 59,1 g eines zähen Oeles bei dem es sich laut IR- und NMR-Spektrum um 3-Phenoxy-α-hydroxy-benzyl-phosphonsäurediethylester handelt.

Analog vorstehendem Beispiel wird auch 3-Phenoxy-4-fluor-α-hydroxy-benzylphosphonsäurediethylester erhalten:

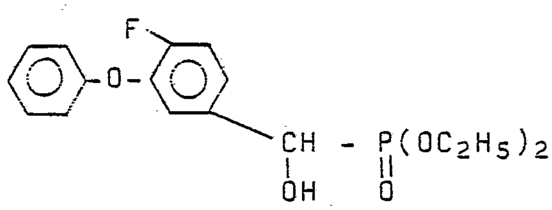

Beispeil 4

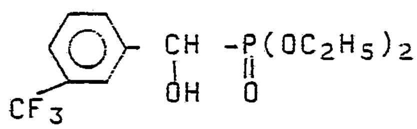

49,6g (0,16 Mol) 3-Trifluormethyl-benzoyl-phosphonsäurediethylester werden in 200 ml Tetrahydrofuran gelöst und mit 5 g Raney-Nickel versetzt, das zunächst mit Wasser, dann mit Ethanol und anschließend mit Tetrahydrofuran gewaschen wurde. Es wird bei einem Wasserstoffdruck von 75-90 bar/$H_2$ und 125°C hydriert. Nach Aufarbeiten in üblicher Weise erhält man 48,1g eines Oeles, das laut IR und $^{1}$H-NMR aus α-Hydroxy-benzyl-phosphonsäurediethylester besteht. Ausbeute: 96,4 % der Theorie.

Patentanspruch

Verfahren zur Herstellung von α-Hydroxy-phosphonsäureestern der Formel I

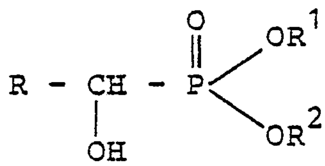

(I)

in welcher

R für gegebenenfalls substituiertes Aryl oder Heteroaryl steht,

$R^1$ und $R^2$ unabhängig voneinander für Alkyl oder Phenyl oder zusammen für Alkandiyl (Alkylen) stehen,

welches dadurch gekennzeichnet ist, daß man α-Oxo-phosphonsäureester mit Wasserstoff in Gegenwart eines Hydrierungskatalysators umsetzt.